Europäisches Patentamt

European Patent Office

Office européen des brevets

(11) Veröffentlichungsnummer: **0 429 708 A1**

## (12) EUROPÄISCHE PATENTANMELDUNG

(21) Anmeldenummer: 89122088.1

(22) Anmeldetag: 30.11.89

(51) Int. Cl.5: **C09J 7/04**, A41B 3/10, D06M 17/06

(43) Veröffentlichungstag der Anmeldung:
05.06.91 Patentblatt 91/23

(84) Benannte Vertragsstaaten:
AT BE CH DE FR GB IT LI NL SE Patentblatt

(71) Anmelder: BILLETER KUNSTSTOFFPULVER AG
Turnerstrasse 26
CH-8033 Zürich(CH)

(72) Erfinder: Bächtiger, Hans Jörg
CH-8143 Buchenegg(CH)

(74) Vertreter: EGLI-EUROPEAN PATENT ATTORNEYS
Horneggstrasse 4
CH-8008 Zürich(CH)

(54) Klebematerial und Verfahren zu dessen Herstellung.

(57) Das Klebematerial setzt sich aus einem offenen , mit Durchlässen (2) versehenen flächenförmigen Trägermaterial (1) und aus einer partiellen Beschichtung der Oberfläche des Trägermaterials in Form von Klebepunkten zusammen. Da das Trägermaterial (1) für den Kleber durchlässig ist, wird mit dem Aufdrucken des Klebermaterials dasselbe auch durch das Trägermaterial gedruckt, so dass ein beidseitig klebendes Flächengebilde entsteht. Da das Trägermaterial (1) nicht klebend ist, kann auf die Benützung einer Adhäsiv-Papierbahn, wie sie bei bekannten Klebematerialien erforderlich ist, verzichtet werden. Da zudem der Kleber in Form von Punkten (4) aufgedruckt werden kann, kann mit einer variierenden Klebebeschichtung ein beliebiger Steifheitsgrad des Klebematerials erreicht werden.

EP 0 429 708 A1

## KLEBEMATERIAL UND VERFAHREN ZU DESSEN HERSTELLUNG

Die Erfindung betrifft ein Klebematerial, welches sich aus einem flächenförmigen Trägermaterial und aus einem auf den beiden Seiten des Trägermaterials angeordnetes thermoplastisches Klebematerial zusammensetzt, welch letzteres als teilweise, vorzugsweise als punkt- oder netzförmige Beschichtung auf den beiden Seiten des Trägermaterials aufgedruckt ist, und ein Verfahren zur Herstellung dieses Klebematerials.

Klebematerial, welches als ein mit einem thermoplastischen Kleber beschichtetes, beidseitig klebendes Flächengebilde ausgebildet ist, findet in der Kleiderkonfektion und im Haushalt Anwendung. Es ersetzt Näharbeit, speziell bei Hosen- und Damenkleidersäumen. Anstelle eines hnadgenähten Saumes an einer Stelle, an welcher keine Naht sichtbar sein soll, wird das Klebematerial einfach eingelegt, wobei der für den Saum vorgesehene Oberstoff nach Innen hochgelegt und mittels dieses in Bandform ⸝vorgesehene Klebematerials mit der äusseren Lage Oberstoff verklebt wird. Das Verkleben kann mit einer Klebepresse oder mit einem Bügeleisen bewerktstellig werden.

Solches Klebematerial wird in kleinerem Umfang auch dazu verwendet, um unbeschichtete Einlagen mit dem Oberstoff zu verkleben oder um zwei Oberstofflagen miteinander zu verbinden.

Zum Stand der Technik sei auf "P.Sroka, Handbuch der Textilen Fixiereinlagen,Sinus Verlag, Kreefeld 1980", verwiesen.

Die erwähnten Klebematerialien werden nach einem der bekannten, dort beschriebenen heissschmelzanalogen Verfahren aus der Schmelze von thermoplastischen Materialien mittels entsprechd gravierten Beschichtungswalzen hergestellt, mit denen Netze auf eine Adhäsiv-Papierbahn gedruckt werden. Die Adhäsiv-Papierbahn dient hierbei als Träger bis zum Klebeeinsatz dieser Netze. Das so entstandene, heissiegelfähige Netz kann dann vom Papier gelöst und nach dem Kaschierverfahren verarbeitet oder durch Ueberbügeln des Papiers mit einem Textilmaterial und dieses durch Ueberbügeln mit einem weiteren Textil klebend miteinander verbunden werden.

Die Heissiegelung von Textilmaterial ist auch mittels Schlitzfilmen möglich. Bei diesem bekannten Verfahren wird eine Folie aus einem thermoplastischem Klebematerial mit versetzten Schlitzen versehen, breitgezogen und fixiert. Dadurch entsteht ebenfalls ein netzähnliches Gebilde, welches neben den vorstehend erwähnten Anwendungen auch zum Verkleben von Wandbelägen und anderen technischen Textilien verwendet werden kann. Die Erfahrungen mit diesen beiden Klebematerialien zeigen, dass es wünschenswert wäre, wenn während dem Heissiegeln die Netzstege reissen und dadurch eine punktförmige, nicht zusammenhängende Verklebung entsteht. Da dies aber nicht verwirklichbar ist, üben diese Klebenetze eine nicht erwünschte, versteifende Wirkung aus.

Bei einem dritten bekannten Verfahren lassen sich heissiegelfähige Thermoplaste durch Extrusion zu Endlos-Filamenten verspinnen, verstrecken und im gleichen Arbeitsgang zu Wirrvliesen verfestigen. Diese Klebevliesstoffe werden meistens in eine Adhäsiv-Papierbahn eingerollt und so in den Handel gebracht.

Alle nach den drei vorstehend erwähnten bekannten Verfahren hergestellten heissiegelbaren Klebematerialien sind mindestens vor dem Versiegeln zusammenhängende Flächengebilde und werden in Breiten bis zu 200 cm in Rollen hergestellt. Ein Aufteilen in schmale, von der Konfektionsindustrie gewünschte Bänder mittels einer Trennmaschine ist ohne Adhäsivpapier-Zwischenlagen wegen der beim Trennen mittels eines Messers entstehenden Wärme nicht möglich. In den meisten Fällen kosten aber die Adhäsivpapier-Zwischenlagen mehr als das heissiegelbare Klebematerial. Das Adhäsivpapier ist je nach dem Verfahren Schutz- oder Trägerbahn und haftet am Klebematerial, kann aber bei Bedarf leicht entfernt werden.

Für die Herstellung von Netzen, Schlitzfilmen und Klebespinnvliesen werden folgende Thermoplastmaterialien verwendet:

Polyäthylene, Aethylen-Vinylazetat-Copolymere, Aethylen-Vinylazetat-Acrylsäure-Terpolymere, Polyester und Terpolyamide.

Wie bereits erwähnt, wäre es vorteilhaft, zur Verwendung des Versteifungseffektes der bekannten Klebematerialien das Klebematerial punktförmig auf das zu klebende Substrat aufzubringen. Zwar ist es bekannt, punktförmige Beschichtungen von Textilien und anderen Substraten auszuführen. Dabei ist es jedoch erforderlich, für eine Durchklebung beide Seiten des Substrats nacheinander zu beschichten.

Hier setzt die Erfindung ein, der die Aufgabe zugrunde liegt, ein Klebematerial der eingangs beschriebenen Art so weiter auszugestalten, dass es als mit einem thermoplastischen Kleber beschichtetes, beidseitig klebendes, ohne Adhäsiv-Papierbahn einsetzbares Klebematerial verwendbar ist.

Diese Aufgabe wird gemäss der Erfindung dadurch gelöst, dass das Trägermaterial ein nicht klebendes, als offenes mit Durchgängen versehenes, durchlässiges Substrat ist, auf welchem sich der Kleber durch das Substrat erstreckt und zusammen mit dem Trägermaterial ein auf beiden Seiten klebendes Flächengebilde bildet. Dadurch wird erreicht, dass ein solches Flächengebilde praktisch als punktförmiges Klebematerial verwendbar ist, da das offene, mit Durchlässen versehene Substrat sozusagen keine Versteifungswirkung ausübt.

Die Erfindung umfasst auch ein Verfahren, dessen Aufgabe die optimale Herstellung des erfindungsgemässen Klebematerials ist. Diese Aufgabe wird gemäss der Erfindung dadurch gelöst, dass ein thermoplastischer Kleber in teilweiser Beschichtung auf ein offenes, mit Durchgängen versehenes, für den Kleber durchlässiges, jedoch nicht klebendes Trägermaterial nur auf der einen Seite des Trägermaterials gedruckt und zudem gleichzeitig auch durch das Trägermaterial hindurch auf die andere Seite desselben durchgedruckt wird, wodurch ein auf beiden Seiten klebendes Flächengebilde geschaffen wird.

Die Erfindung ist in der Zeichnung beuispielsweise dargestellt und nachfolgend beschrieben. Es zeigen

Fig. 1 eine Draufsicht eines erfindungsgemässen Klebematerials, mit punktförmiger Klebebeschichtung auf einem Wirrvlies,

Fig. 2 einen Schnitt längs der Linie II-II in Fig. 1,

Fig. 3 einen Teil einer Bahn aus einem Klebematerial mit beidseitig klebenden Punktbeschichtungen und mit in bestimmten Abständen vorgesehenen unbeschichteten Streifen,

Fig. 4 ein Teil einer Bahn aus einem Klebematerial mit unterschiedlichen Punktbeschichtugen,

Fig. 5 einen schematisch dargestellten Schnitt eines Hosen- oder Rockbundes,

Fig. 6 einen schematisch dargestellten Schnitt von drei Kragenkonstruktionen a., b. und c., wobei a. und b. mit bekannten Klebematerialien geschaffene Konstruktionen und c. eine Kragenkonstruktion unter Verwendung des erfindungsgemässen Klebematerials und

Fig. 7 eine Explosionsdarstellung, eines Kragens, welche den Aufbau zeigt, der aus Oberstoff-Kragenaussenseite, Grundeinlage, Durchverklebung und Unterkragen-Verklebung zusammengesetzt ist.

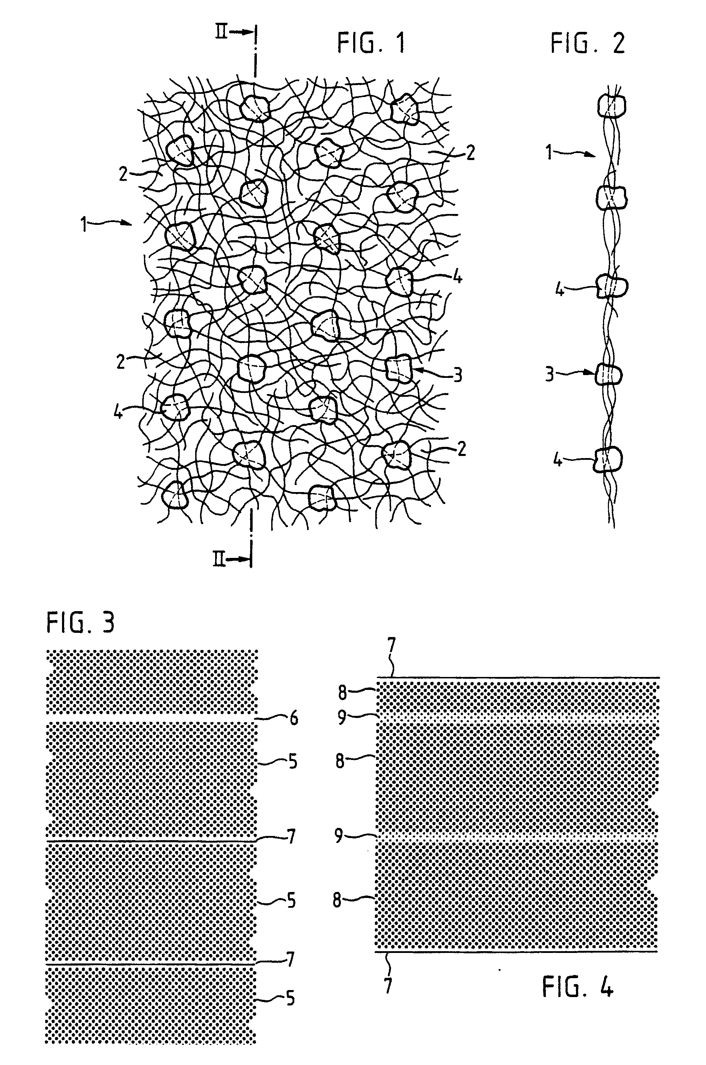

In Fig. 1 und 2 ist eine Ausführungsform des erfindungsgemässen Klebematerials schematisch dargestellt. Das Klebematerial weist ein als Wirrvlies gebildetes Trägermaterial 1 auf. Es kann aber auch ein Parallelvlies verwendet werden. Wesentlich ist, dass das Trägermaterial 1 ein möglichst tiefes Gewicht pro Quadratmeter, z.B. 8-15 g/m$^2$, aufweist und für den Kleber durchlässig ist. Wie aus Fig. 1 erkennbar ist, handelt es sich beim Trägermaterial 1 um ein offenes, mit zahlreichen Durchlässen 2 versehenes Substrat. Dieses Trägermaterial 1 wird einseitig mit einem thermoplastischen Kleber beschichtet, z.B. in Punktbeschichtung. Gleichzeitig lässt das dünne und durchlässige Trägermaterial 1 einen Durchschlag des thermoplastischen Klebers durch, welcher somit beidseitig wirkt.

Das leichte Vlies dient dabei lediglich als Träger der Beschichtung und wird nach der Verklebung funktionslos. Das heissiegelbare Klebematerial kann somit unzusammenhängend, am vorteilhaftesten in Punktrasterform, aufgebracht werden. Im Gegensatz zu Netzen aus Klebematerial bewirkt die unzusammenhängende Beschichtung nur eine minimale Versteifung des verklebten Artikels. In Fig. 1 ist die Beschichtung 3 in Form von Punkten 4 aufgedruckt. Wie aus Fig. 2 ersichtlich ist, schlägt der einseitig gedruckte Punkt 4 durch das Trägermaterial auf die andere Seite, so dass ein beidseitig klebendes Flächengebilde vorliegt. Dabei können unterschiedliche Mengen Klebematerial pro Quadratmeter aufgedruckt und je nach Zweck mehr oder weniger versteifende Rasterdessins verwendet werden, z.B. kleine Beschichtungspunkte mit grossen Abständen zwischen den Beschichtungspunkten erzeugen wenig Versteifung nach dem Verkleben. Grosse Beschichtungspunkte 4 mit engem Abstand zwischen den einzelnen Punkten werden dagegen nach dem Verkleben mehr Versteifung erzeugen.

Da die Beschichtung nicht zusammenhängend ist und ein unter Hitzeeinwirkung nicht klebendes Trägermaterial 1 verwendet wird, lässt sich das Klebematerial auf einer Trennmaschine in Bänder schneiden, ohne dass es an den Seiten der Rollen durch die beim Trennen entstehende Hitze zusammenkleben würde.

Zum Aufdrucken solcher Punkte 4 auf das Trägermaterial 1 eignet sich ein bekanntes Durchdruckverfahren, siehe GB-PS 2 130 125, bei welchem das Trägermaterial 1 für thermoplastische Beschichtungen nicht erwärmt werden muss. Damit lassen sich leichteste textile Flächengebilde, wie z.B. Spinnvliese von 8-10 g/m$^2$, beschichten.

Um bei Beschichtungsmaterial mit niedrigem Schmelzpunkt und bei nahe aneinander liegenden Beschichtungspunkten sowie einem dünnen Trägermaterial ein Verschmelzen beim Trennvorgang zu vermeiden, können die Beschichtungswerkzeuge, z.B. Zylinderschablonen, so ausgebildet werden, siehe Fig. 3, dass sich in den durch die gewünschte Breite der Bänder 5 gegebenen Abständen unbeschichtete Streifen 6 befinden. Die in diesen Streifen eingetragene Linie 7 stellt hierbei die Schnittstelle dar, an welcher die Bänder 5 voneinander getrennt werden.

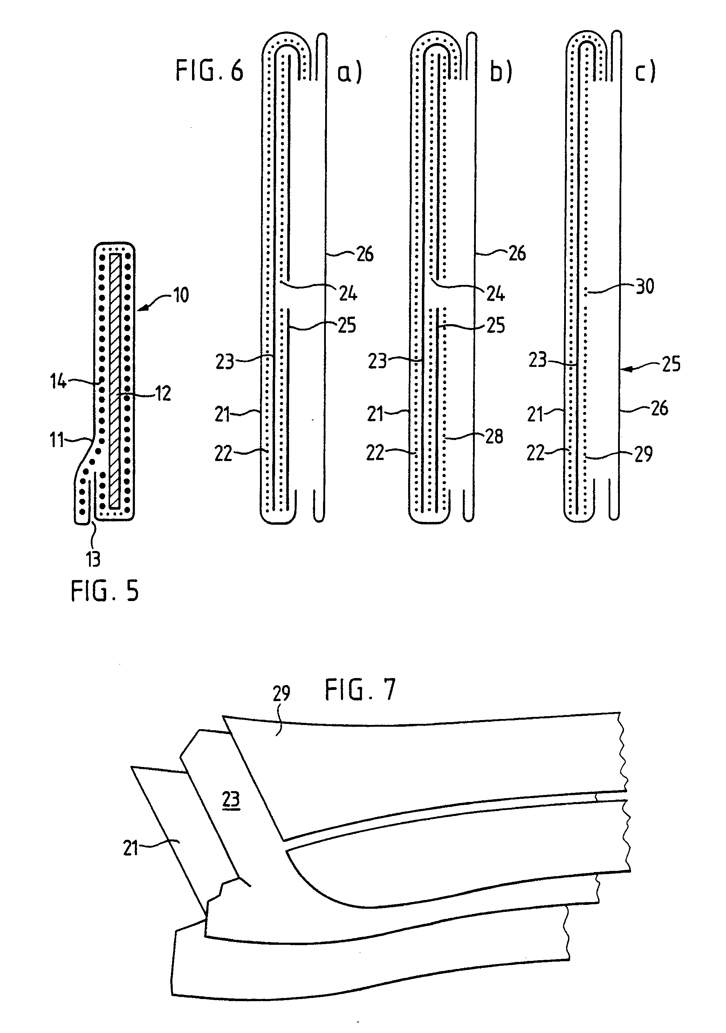

Die Beschichtungswerkzeuge können auch so ausgebildet werden, dass sie über die Breite unterschiedliche Beschichtungen erzeugen, also beispielsweise streifenweise kleine Beschichtungspunkte mit grossem Abstand zueinander und streifenweise grosse Beschichtungspunkte mit kleinem Abstand zueinander. Es entstehen so Zonen von unterschiedlicher Steifheit nach dem Heissiegeln. Damit können beispielsweise weiche Umbruchstellen erzeugt werden, welche als Konfektionshilfe dienen, siehe Fig. 4.

Das in Fig. 4 dargestellte Klebematerial zeigt Schnittstellen 7 in einem unbeschichteten Streifen. Mit 8 sind schwer beschichtete Zonen zur Verklebung und Versteifung bezeichnet, während schwach beschichtete Zonen 9 zwischen den Zonen 8 liegen und geringe Versteifung aufweisen, z.B. Umbruchstellen. Die schwer beschichteten Zonen 8 weisen beispielsweise 35 g/m² thermoplastischen Klebstoff und die schwach beschichtete Zone 10 g/m² thermoplastischen Klebstoff auf.

In Fig. 5 ist ein Hosen- oder Rockbund 10 dargestellt. Zwischen einem Oberstoff 11 und einer Bundeinlage 12 ist ein beidseitig klebendes thermoplastisches Klebeband 14 eingelegt und beim Heissiegeln wird der Oberstoff 11 mit der Bundeinlage 12 verklebt. An der Stelle 13 wird der Bund mit der Hose oder dem Rock verbunden.

Dass Klebematerial nach Fig. 1 und 2 lässt sich auch beispielsweise mit Polyäthylen oder Polyester beschichtet zur Verklebung von Hemden- und Blusenkragen verwenden.

Es besteht immer wieder der Wunsch nach einem wäschereigerechten Hemd. Neben den Hemdenknöpfen, die beidseitig geschüsselt sein müssen, ist der Hemdenkragen der für Beschädigungen anfälligste Teil des Hemdes in der kommerziellen Wäscherei. Seit Hemdenoberstoffe mit beschichteten Einlagegeweben direkt verklebt werden, erleiden die Hemdenkragen in der Wäscherei weniger Beschädigungen. Es besteht jedoch immer noch das Problem des Durchdrückens der Falten des auf der Kragenunterseite befindlichen, meist nach der ersten Wäsche überschüssigen, nicht verklebten Oberstoffes. Versuche mittels einer beidseitig beschichteten Einlage auch den Oberstoff der Kragenunterseite mit der Krageneinlage zu verbinden, ergaben bisher für den heutigen Geschmack immer zu steife Kragen.

In Fig. 6 sind drei Kragen a., b. und c. miteinander verglichen, wobei a. und b. Kragen sind, die mit bekannten Mitteln hergestellt werden. Bei der Ausführung a. ist 21 eine Oberstoff-Kragenaussenseite, 22 eine heissiegelbare Beschichtung auf einer Grundeinlage 23, während 24 eine heissiegelbare Beschichtung auf einer Durchverklebungseinlage 25 und 26 eine Oberstoff-Kragenunterseite ist.

Der Kragen b. ist gleich aufgebaut wie der Kragen a., jedoch mit dem Unterschied, dass auf der Durchverklebungseinlage 25 noch eine rückseitige heissiegelbare Beschichtung zur Verbindung des Oberstoffes der Kragenunterseite mit der Einlage 25 vorgesehen ist.

Die Ausführung a. weist somit zwei Lagen Einlage 23, 25 und zwei Lagen Beschichtung 22, 24 auf und stellt die herkömmliche Konstruktion dar, die, wie bereits erwähnt, nicht wäschegerecht ist. Die Ausführung b. wäre zwar wäschegerecht, wird jedoch wegen zwei Lagen Einlage 23, 25 und drei Lagen Beschichtung 23, 24, 28 zu steif.

Bei der Ausführung c. ist 21 der Oberstoff der Kragenausssenseite und 22 die heissiegelbare Beschichtung auf der Grundeinlage 23. Anschliessend folgt ein beidseitig heissiegelbares Klebematerial 29 gemäss der Erfindung, z.B. nach Fig. 1. Wie bereits erwähnt, kann für die Beschichtung unterschiedlich gewählt werden, so dass auch die geringere Beschichtung an der Umbruchlinie 30 problemlos vorgesehen werden kann. Wegen der Verklebung der Oberstoff-Kragenunterseite 26 liegt eine wäschegerechte Ausführung vor, jedoch weist sie im Gegensatz zu der Ausführung b. die gewünschte geringere Steifheit auf.

In Fig. 7 ist der Kragen c. ohne Oberstoff-Kragenunterseite dargestellt. Auf die Oberstoff-Kragenaussenseite 21 liegt die Grundeinlage 23 mit der heissiegelbaren Beschichtung. Auf diese folgt das beidseitig klebende Klebematerial 29 gemäss der Erfindung.

Das beschriebene Klebematerial kann in gleicher Weise wie die bekannten Klebenetze verwendet werden, kann jedoch zudem den Vorteil der punktförmigen Beschichtung mit variierender Punktverteilung und Punktgrösse aufweisen. Zudem ist seine Handhabung einfacher, da auf eine Adhäsiv-Papierbahn verzichtet werden kann. Somit stellt diese Lösung auch eine sehr kostengünstige Lösung dar.

## Ansprüche

1. Klebematerial, welches sich aus einem flächenförmigen Trägermaterial (1) und aus einem auf beiden Seiten des Trägermaterials angeordneten Kleber zusammensetzt, welch letzterer als teilweise, vorzugsweise als punkt-oder netzförmige Beschichtung auf beiden Seiten des Trägermaterials aufgebracht ist, dadurch gekennzeichnet, dass das Trägermaterial (1) ein nicht klebendes, als offenes, mit Durchgängen (2) versehenes, durchlässiges Substrat ist, auf welchem sich der Kleber (4) durch das Substrat erstreckt und zusammen mit dem Trägermaterial ein auf beiden Seiten klebendes Flächengebilde bildet.

2. Klebematerial nach Anspruch 1, dadurch gekennzeichnet, dass das Trägermaterial (1) ein offenes, nichtklebendes Vlies ist, welches ein Gewicht pro Quadratmeter von 6-20 g, vorzugsweise 8-15 aufweist.

3. Klebematerial nach Anspruch 2, dadurch gekennzeichnet, dass das Vlies ein Parallelvlies oder ein Wirrvlies ist.

4. Klebematerial nach einem der Ansprüche 1 bis 3, dadurch gekennzeichnet, dass der Kleber in seiner Verteilung unzusammenhängend auf dem Trägermaterial (1), beispielsweise im Punktrasterform verteilt ist.

5. Klebematerial nach einem der Ansprüche 1 bis 4, dadurch gekennzeichnet, dass das Trägermaterial (1) unterschiedliche Beschichtungen, beispielsweise streifenweise kleine Beschichtungspunkte mit grossem Abstand und grosse Beschichtungspunkte mit kleinem Abstand, aufweist.

6. Verfahren zur Herstellung des Klebematerials nach einem der Ansprüche 1 bis 5, dadurch gekennzeichnet, dass ein thermoplastischer Kleber in teilweiser Beschichtung auf ein offenes, mit Durchgängen versehenes, für den Kleber durchlässiges, jedoch nicht klebendes Trägermaterial nur auf der einen Seite des Trägermaterials gedruckt und zudem gleichzeitig auch durch das Trägermaterial hindurch auf die andere Seite derselben durchgedruckt wird, wodurch ein auf beiden Seiten klebendes Flächengebilde geschaffen wird.

7. Verfahren nach Anspruch 6, dadurch gekennzeichnet, dass zum Schneiden des Flächengebildes in Bänder in den Schnittlinien ein kleberfreier Streifen vorgesehen wird.

8. Verfahren nach Anspruch 6 oder 7, dadurch gekennzeichnet, dass der Kleber mit Siebdruck aufgedruckt wird.

FIG. 1

FIG. 2

FIG. 3

FIG. 4

FIG. 6

a) b) c)

FIG. 5

FIG. 7

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 115 958 (FIRMA STROTZ) <br> * Ansprüche 1-3,5-7 * <br> ----- | 1,3,4,6 ,8 | C 09 J 7/04 <br> A 41 B 3/10 <br> D 06 M 17/06 |

RECHERCHIERTE SACHGEBIETE (Int. Cl.5)

C 09 J
A 41 B
D 06 M

Der vorliegende Recherchenbericht wurde für alle Patentansprüche erstellt

| Recherchenort | Abschlußdatum der Recherche | Prüfer |
|---|---|---|
| DEN HAAG | 13-07-1990 | BUSCAGLIONE Y. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

&: Mitglied der gleichen Patentfamilie, übereinstimmendes Dokument

EPO FORM 1503 03.82 (P0403)